# FASCICULE DE BREVET EUROPEEN

(11) **EP 3 575 194 B1**
(45) Date de publication et mention de la délivrance du brevet: **20.01.2021**
(21) Numéro de dépôt: 19176352.3
(22) Date de dépôt: 24.05.2019
(51) Int. Cl.: B62J 3/00, G10K 1/06

(54) **DISPOSITIF MÉCANIQUE D'AVERTISSEMENT POUR VÉHICULE, NOTAMMENT POUR VÉLOCIPÈDE**
MECHANISCHE WARNVORRICHTUNG FÜR FAHRZEUG, INSBESONDERE FÜR FAHRRAD
MECHANICAL WARNING DEVICE FOR A VEHICLE, IN PARTICULAR FOR VELOCIPEDE

(30) Priorité: 28.05.2018 FR 1854529
(43) Date de publication de la demande: 04.12.2019
(73) Titulaire: Hermes Sellier, 75008 Paris (FR)
(72) Inventeur: ROUBY, Eric, 78490 MONTFORT L'AMAURY (FR); VU TRUONG, Doan, 94200 IVRY SUR SEINE (FR)
(74) Mandataire: Santarelli

(56) Documents cités:
- EP-A1- 3 199 436
- CN-U- 207 292 224
- KR-A- 20110 008 764
- US-A- 4 466 329

## Description

### DOMAINE DE L'INVENTION

L'invention concerne un dispositif mécanique d'avertissement pour véhicule, notamment pour vélocipède, aussi appelé plus communément sonnette.

L'invention concerne également un tel véhicule, notamment un vélocipède, pourvu d'un tel dispositif mécanique d'avertissement.

### ARRIERE PLAN TECHNOLOGIQUE

On connaît des dispositifs mécaniques d'avertissement pour véhicule, notamment pour vélocipède, et en particulier des sonnettes, pourvus d'un support, d'une cloche montée sur ce support, d'un marteau monté mobile sur le support et configuré pour venir frapper la cloche lorsque ce marteau est actionné manuellement, et d'un organe de rappel coopérant avec le marteau pour le ramener dans une position stable après qu'il ait été actionné manuellement et qu'il ait frappé la cloche.

L'organe de rappel est classiquement formé d'un ressort qui se comprime et se détend à chaque fois que le marteau est actionné manuellement. En outre, le ressort est soumis à la force exercée par l'utilisateur lorsque ce dernier actionne manuellement le marteau.

On connaît aussi d'autres dispositifs d'avertissement pour véhicule, notamment pour vélocipède, qui sont actionné électriquement plutôt que mécaniquement ou bien qui sont totalement électriques.

Le document EP 3 199 436 A1 décrit un dispositif mécanique d'avertissement pour véhicule, notamment pour vélocipède, selon le préambule de la revendication 1.

### OBJET DE L'INVENTION

L'invention vise à fournir un dispositif mécanique d'avertissement pour véhicule, notamment pour vélocipède, qui soit particulièrement simple et commode tant à la fabrication qu'à l'utilisation et qui soit aussi particulièrement fiable et durable.

L'invention a ainsi pour objet, sous un premier aspect, un dispositif mécanique d'avertissement pour véhicule, notamment pour vélocipède, comportant un corps, une cloche montée sur ledit corps et un marteau monté mobile sur ledit corps et par rapport à ladite cloche, caractérisé en ce qu'il comporte en outre un mécanisme à aimants qui est configuré pour, lorsque ledit marteau est déplacé depuis une position stable vers une position intermédiaire dans laquelle il est écarté de ladite cloche, entrainer ledit marteau depuis ladite position intermédiaire pour venir frapper ladite cloche puis ramener ledit marteau dans ladite position stable.

En d'autres termes le mécanisme à aimants autorise le déplacement du marteau pour frapper la cloche et assure son rappel en position stable.

Un tel mécanisme à aimants est particulièrement commode et durable puisqu'il ne subit pas directement la force exercée sur le marteau pour le déplacer depuis la position stable vers la position intermédiaire.

Au surplus, un tel mécanisme à aimants n'est pas soumis à une usure structurelle et mécanique comme peut l'être un ressort tel que décrit dans les dispositifs de l'art antérieur.

Par conséquent, grâce au mécanisme à aimants que comporte le dispositif mécanique d'avertissement selon l'invention, ce dernier est particulièrement fiable tout en restant particulièrement simple.

Selon d'autres caractéristiques préférées particulièrement simples, commodes et économiques du dispositif mécanique d'avertissement selon l'invention :
- ledit mécanisme à aimants comporte au moins un premier aimant logé dans ledit marteau et au moins un deuxième aimant logé dans ledit corps ;
- ledit au moins un premier aimant et ledit au moins un deuxième aimant sont agencés de sorte à ramener naturellement ledit marteau dans sa position stable ;
- ledit marteau est monté mobile en rotation par rapport audit corps ;
- ledit corps est pourvu d'une butée contre laquelle ledit marteau vient au contact lorsqu'il frappe ladite cloche et qui permet le retour en position stable dudit marteau sans frapper à nouveau ladite cloche ;
- ledit corps et ladite cloche sont configurés pour que ladite cloche soit montée à proximité immédiate de ladite butée ;
- ledit dispositif mécanique d'avertissement est configuré de sorte que ledit marteau se trouve à une distance prédéterminée de ladite butée en position stable ; grâce à quoi lorsque ledit marteau est en position intermédiaire, il est écarté de ladite cloche et de ladite butée, lorsque ledit marteau est relâché de sa position intermédiaire, ledit mécanisme à aimants entraine ledit marteau depuis sa position intermédiaire, au-delà de sa position stable, jusqu'à venir au contact de ladite butée et frapper ladite cloche, et lorsque ledit marteau a frappé ladite cloche, ledit mécanisme à aimants ramène ledit marteau dans sa position stable sans refrapper ladite cloche ;
- ledit corps est pourvu d'une anse ayant un logement dans lequel est au moins partiellement logé ledit marteau et duquel saille une extrémité dudit marteau pour sa préhension ;
- ledit corps est pourvu d'une base pour son montage sur un support quelconque, notamment un guidon de vélocipède ;
- ladite base et la dite anse sont à distance l'une de l'autre, formant une interruption dans ledit corps, notamment pour son montage sur ledit support quelconque ;
- ledit corps a une forme globalement annulaire et ladite cloche a une forme globalement allongée et incurvée ;
- ladite cloche est assujettie mécaniquement sur ledit corps avec une liberté de mouvement de sorte à pouvoir vibrer par rapport audit corps lorsqu'elle est frappée par ledit marteau ;
- ledit dispositif mécanique d'avertissement est pourvu d'au moins un plot de montage saillant de l'un de ladite cloche et dudit corps, d'au moins un premier logement ménagé dans l'autre dudit corps et de ladite cloche pour recevoir ledit plot de montage ; et ledit dispositif mécanique d'avertissement est en outre pourvu d'au moins un organe de rappel élastique interposé entre ladite cloche et ledit corps ; et/ou
- ledit corps comporte une première coquille et une deuxième coquille assemblée avec ladite première coquille.

L'invention a aussi pour objet, sous un second aspect, un véhicule, notamment un vélocipède, pourvu d'un dispositif mécanique d'avertissement tel que décrit ci-dessus qui est monté sur un support quelconque dudit vélocipède.

### BREVE DESCRIPTION DES DESSINS

On va maintenant poursuivre l'exposé de l'invention par la description d'un exemple de réalisation, donnée ci-après à titre illustratif et non limitatif, en référence aux dessins annexés sur lesquels :
- les figures 1 et 2 représentent schématiquement en perspective un dispositif mécanique d'avertissement pour vélocipède, respectivement dans une position stable et dans une position intermédiaire d'un marteau qu'il comporte ;
- la figure 3 représentent schématiquement en perspective éclatée dispositif mécanique d'avertissement des figures 1 et 2 ;
- les figures 4 et 5 sont des vues partielles, respectivement en perspective et de face, du dispositif mécanique d'avertissement dans la position stable du marteau ;
- les figures 6 et 7 sont des vues partielles, respectivement en perspective et de face, du dispositif mécanique d'avertissement dans la position intermédiaire du marteau ; et
- les figures 8 et 9 sont des vues partielles, respectivement en perspective et de face, du dispositif mécanique d'avertissement dans une position du marteau où il vient frapper une cloche du dispositif.

### DESCRIPTION DETAILLEE D'UN EXEMPLE DE REALISATION

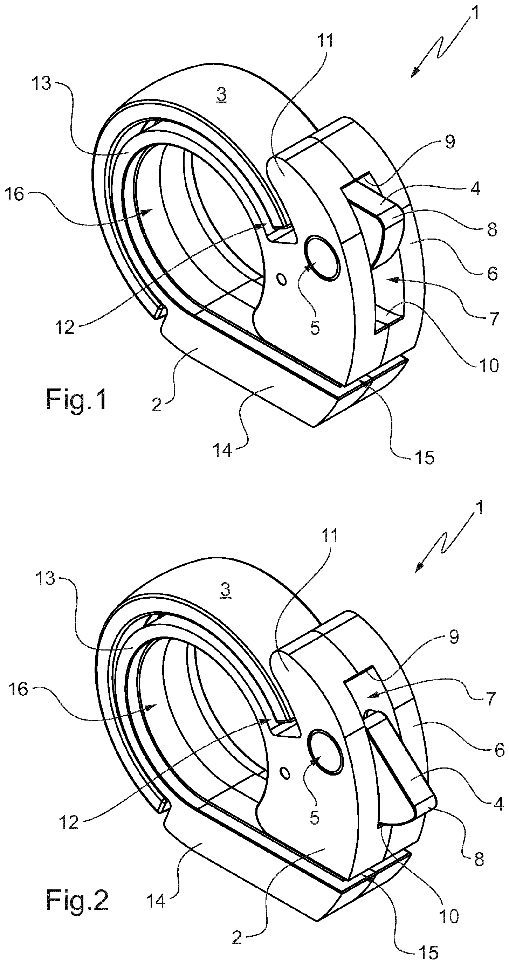

Les figures 1 et 2 montrent un dispositif mécanique d'avertissement 1 pour véhicule, en particulier du type vélocipède, qui est appelé plus communément sonnette ou sonnette d'avertissement.

La sonnette 1 comporte un corps 2, une cloche 3 montée sur le corps 2, ainsi qu'un marteau 4 monté mobile sur le corps 2 et par rapport à la cloche 3.

Sur la figure 1, le marteau 4 de la sonnette 1 est montré dans une position stable, tandis que sur la figure 2, le marteau 4 de la sonnette 1 est montré dans une position intermédiaire.

Pour passer de la position stable à la position intermédiaire, le marteau 4 a été actionné manuellement par un utilisateur, en vue de frapper la cloche 3 avec le marteau 4 pour envoyer un signal d'avertissement, ici un son.

La sonnette 1 comporte un mécanisme à aimants 5 qui est configuré pour, lorsque le marteau 4 est déplacé depuis sa position stable vers sa position intermédiaire dans laquelle il est écarté de la cloche 3, entrainer le marteau 4 depuis la position intermédiaire pour venir frapper la cloche 3 puis ramener le marteau 4 dans sa position stable (voir ci-après).

Le corps 2 a une forme globalement annulaire et la cloche 3 a une forme globalement allongée et incurvée.

La cloche 3 est assujettie mécaniquement sur le corps 2 avec une liberté de mouvement de sorte à pouvoir vibrer par rapport au corps 2 lorsqu'elle est frappée par le marteau 4 (voir ci-après).

Le corps 2 est pourvu d'une anse 6 ayant un logement 7 dans lequel est au moins partiellement logé le marteau 4 et duquel saille une première extrémité 8 du marteau 4 pour sa préhension en vue de son actionnement.

Le corps 2 est pourvu d'une première butée 9 formée dans l'anse 6, à une première extrémité du logement 7, et d'une deuxième butée 10 formée aussi dans l'anse 6, à une seconde extrémité du logement 7 opposée à la première extrémité.

Le marteau 4, lorsqu'il est dans sa position stable, se trouve à une distance prédéterminée de la première butée 9 (figure 1).

Le marteau 4, lorsqu'il est dans sa position intermédiaire, vient au contact de et en butée contre la deuxième butée 10 (figure 2). Autrement dit, le marteau 4 se trouve à distance et est écarté de la première butée 9.

Le marteau 4, lorsqu'il vient frapper la cloche 3, vient aussi au contact de et en butée contre la première butée 9 (voir ci-après).

Autrement dit, le marteau 4 est ici mobile dans le logement 7 de l'anse 6, entre la première butée 9 et la deuxième butée 10.

La première butée 9 et la distance prédéterminée qui la sépare du marteau 4 lorsque ce dernier est en position stable, permet au mécanisme à aimants 5 de ramener le marteau 4 dans sa position stable après qu'il ait frapper la cloche 3, et sans qu'il frape à nouveau cette dernière.

On notera que le corps 2 et la cloche 3 sont configurés pour que la cloche 3 soit montée à proximité immédiate de la première butée 9.

En particulier, l'anse 6 forme, au niveau de la première butée 9, une protrusion 11 définissant ainsi un espace 12 entre une paroi globalement annulaire 13 du corps 2 et cette protrusion 11. La cloche 3 est partiellement introduite dans cet espace 12.

Le corps 2 est en outre pourvu d'une base 14 pour son montage sur un support quelconque, notamment un guidon du vélocipède (non représenté).

La base 14 et l'anse 6 sont à distance l'une de l'autre, formant une interruption 15 dans le corps 2, notamment pour son montage sur le support quelconque.

Le corps 2 est configuré de sorte que la paroi globalement annulaire 13 est raccordée par une première extrémité à l'anse 6, et par une deuxième extrémité opposée à la première extrémité à la base 14.

L'interruption 15 dans le corps 2 permet d'accéder à un orifice 16 définie par la forme globalement annulaire du corps 2.

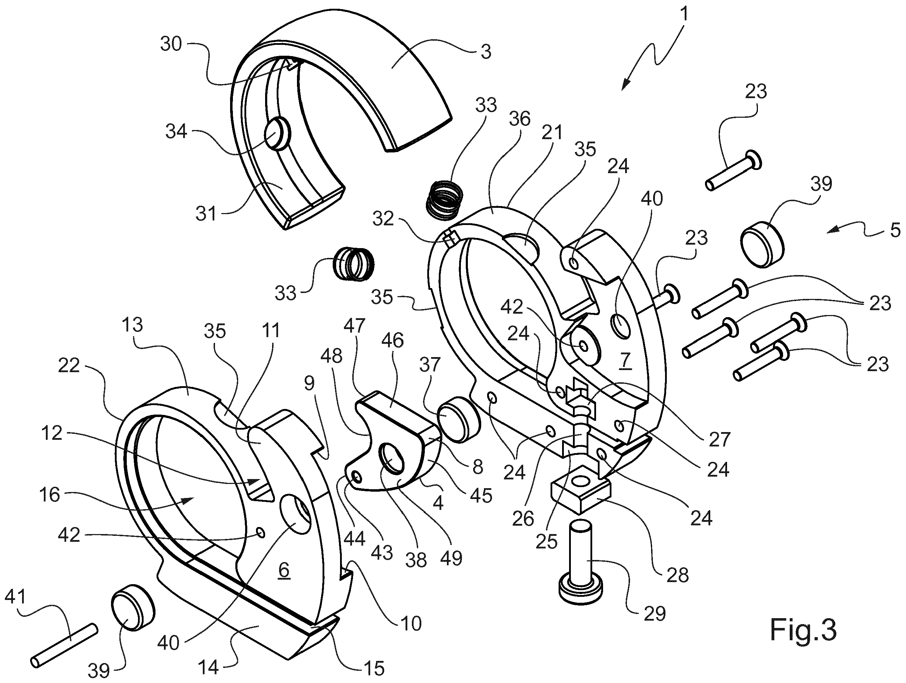

On va maintenant décrire plus en détail la sonnette 1 en référence à la figure 3 où cette sonnette 1 est montrée en perspective éclatée.

Le corps 2 est formé d'une première coquille 21 et d'une deuxième coquille 22 configurée pour être assemblée avec la première coquille 21 par l'intermédiaire de premiers organes de fixation 23, par des vis ou des rivets, introduits dans des alésages 24 ménagées dans les première et deuxième coquilles 21 et 22.

Le corps 2 est pourvu d'un premier orifice 25, par exemple de forme globalement rectangulaire, ménagé dans la base 14 de chacune des première et deuxième coquilles 21 et 22.

Le corps 2 est pourvu aussi d'un deuxième orifice 26, par exemple de forme globalement circulaire, ménagé aussi dans la base 14 de chacune des première et deuxième coquilles 21 et 22, et prolongeant le premier orifice 25 jusqu'à déboucher au niveau de l'interruption 15 du corps 2.

Le corps 2 est pourvu également d'un troisième orifice 27, par exemple présentant une portion circulaire, puis une portion rectangulaire puis une autre portion circulaire, ménagé dans l'anse 6 de chacune des première et deuxième coquilles 21 et 22, et débouchant au niveau de l'interruption 15 du corps 2 et en regard du deuxième orifice 26.

La sonnette 4 comporte un deuxième organe de fixage, par exemple formé d'un écrou 28 et d'une vis 29 qui sont configurés pour être introduits respectivement dans le premier orifice 25 et dans les deuxième et troisième orifices 26 et 27 du corps 2 ; pour le montage serré de la sonnette sur le support quelconque.

La sonnette 1 est pourvue d'un plot de montage 30, par exemple en forme de T, qui saille d'une face interne 31 de la cloche 3.

Le corps 2 est pourvu d'un premier logement 32 ménagé dans la paroi globalement annulaire 13 de chacune des première et deuxième coquilles 21 et 22, et prévu pour recevoir le plot de montage 30 pour l'assujettissement mécanique de la cloche 3 sur le corps 2.

La sonnette 1 est en outre pourvue d'organes de rappel élastique 33, par exemple des ressorts hélicoïdaux, interposés entre la cloche 3 et le corps 2.

Le corps 2 est pourvu de deuxièmes logements 35 ménagés sur une face externe 36 de la paroi globalement annulaire 13 de chacune des première et deuxième coquilles 21 et 22, et la cloche 3 est pourvue de logements complémentaires 34 ménagés sur sa face interne 31.

Les deuxièmes logements 35 du corps 2 et les logements complémentaires 34 de la cloche sont agencés en regard deux à deux et reçoivent partiellement les ressorts hélicoïdaux 33 pour permettre la vibration de la cloche 3 lorsqu'elle a été frappée par le marteau 4.

Le mécanisme à aimants 5 comporte un premier aimant 37 logé un dans un premier évidemment 38 ménagé dans le marteau 4.

Le mécanisme à aimants 5 comporte des deuxièmes aimants 39 logés dans des deuxièmes évidements 40 ménagés dans chacune des première et deuxième coquilles 21 et 22 du corps 2.

Le premier aimant 37 et les deuxièmes aimants 39 sont agencés de sorte à ramener naturellement le marteau 4 dans sa position stable.

Autrement dit, dans la position stable du marteau 4, le premier aimant 37 et les deuxièmes aimants 39 sont sensiblement alignés.

Cela signifie aussi que lorsque le marteau 4 est déplacé de sa position stable et donc que le premier aimant 37 et les deuxièmes aimants 39 ne sont plus alignés, ils ont tendance à ramener le marteau 4 dans sa position stable.

La sonnette 4 est pourvue également d'une tige ici en forme de goupille 41, qui est introduite dans un orifice traversant 42 ménagé dans chacune des première et deuxième coquilles 21 et 22 du corps 2.

Le marteau 4 est monté mobile en rotation autour de la goupille 41 et donc par rapport au corps 2. Pour ce faire, le marteau 4 est ici pourvu d'un orifice 43 dans et au travers duquel passe la goupille 41.

Le marteau 4 présente ici globalement une forme à trois côtés, dont un premier côté 45 qui est par exemple incurvé et qui s'étend entre la première extrémité 8 et une deuxième extrémité 44 du marteau 4.

L'orifice 43 du marteau 4 est ici ménagé sensiblement au niveau de cette deuxième extrémité 44 de ce marteau 4.

Le premier côté 45 du marteau 4 est configuré pour venir en appui contre la deuxième butée 10 de l'anse 6, dans la position intermédiaire du marteau 4.

Le marteau 4 comporte un deuxième côté 46 qui est par exemple droit et qui s'étend entre la première extrémité 8 et une troisième extrémité 47 du marteau 4.

Le deuxième côté 46 du marteau 4 est configuré pour venir en appui contre la première butée 9 de l'anse 6, lorsque le marteau 4 frappe la cloche 3.

Le marteau 4 comporte un troisième côté 48 qui est par exemple incurvé et qui s'étend entre la deuxième extrémité 44 et la troisième extrémité 47 du marteau 4.

Ce troisième côté 48 a une forme qui lui permet d'éviter la portion du corps 2 dans laquelle est formé l'espace 12 de réception d'une partie de la cloche 3.

Le premier évidemment 38 du marteau 4 prévu pour loger le premier aimant 37 est positionné sensiblement au centre du marteau 4 et débouche de part et d'autre de faces latérales 49 de ce dernier.

Ainsi que mentionné plus haut, lorsque marteau 4 est dans sa position stable, il est à une distance prédéterminée de la première butée 9.

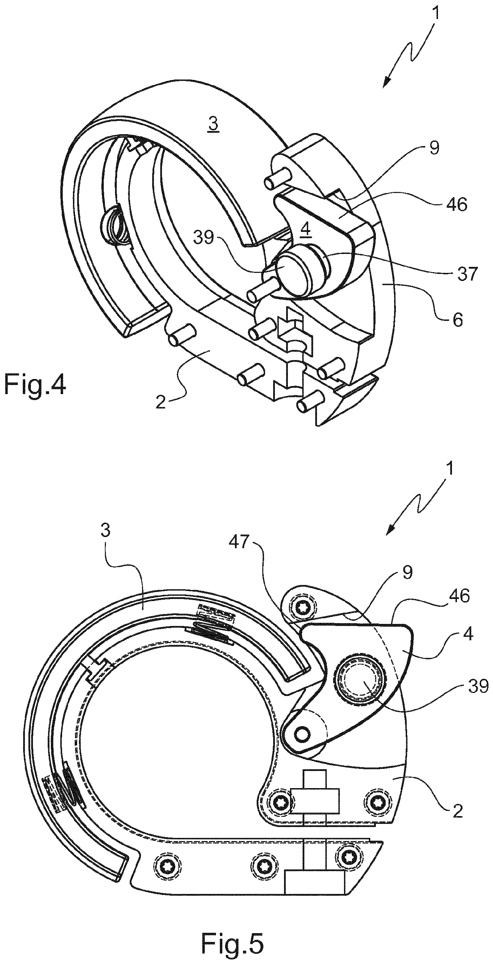

Plus particulièrement, sur les figures 4 et 5, le marteau 4 est montré avec son deuxième côté 46 qui est en regard et à une distance prédéterminée de la première butée 9 formée sur l'anse 6 du corps 2.

Il est à noter que dans l'exemple illustré, c'est la troisième extrémité 47 du marteau 4 qui se trouve au plus près et à proximité immédiate de la première butée et de la cloche 3, tout en restant à distance de ces dernières. Dans l'exemple illustré, la distance prédéterminée est donc relativement petite.

Dans la position stable du marteau 4, le premier aimant 37 qu'il loge est aligné avec les deuxièmes aimants 39 (un seul est visible) logés dans le corps 2. Il s'agit d'une position d'équilibre obtenu grâce au mécanisme à aimants.

Lorsque le marteau 4 est en position intermédiaire, il est écarté manuellement de la cloche 3 et de la première butée 9 et il vient au contact de la deuxième butée 10.

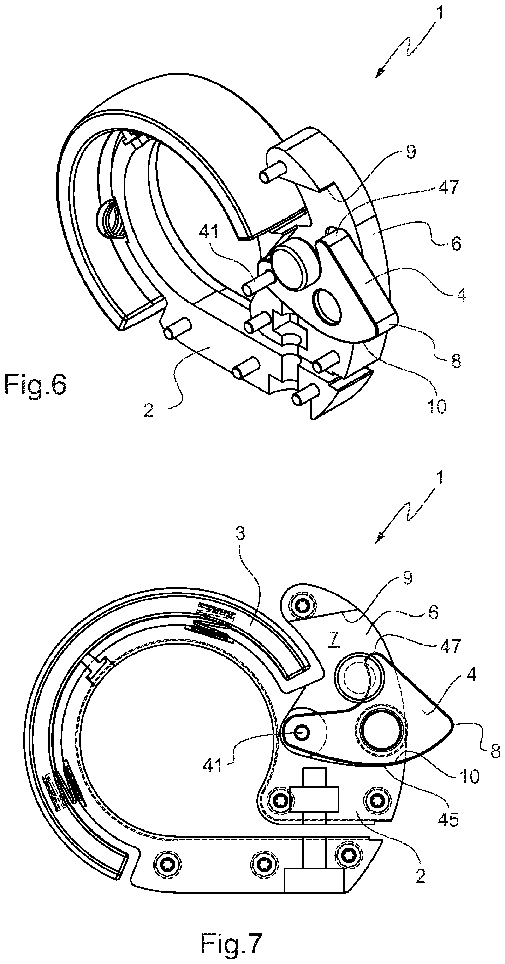

Plus particulièrement, sur les figures 6 et 7, le marteau 4 a été déplacé en rotation, par sa première extrémité 8, autour de la goupille 41.

Le marteau 4 est ainsi montré avec son premier côté 45 qui vient au contact de la deuxième butée 10 formée sur l'anse 6 du corps 2.

Autrement dit, le marteau 4 a son deuxième côté 46 qui n'est plus en regard de la première butée 9 et la troisième extrémité 47 n'est plus à proximité immédiate de cette première butée. C'est d'ailleurs plutôt le troisième côté 48 du marteau 4 qui est sensiblement en regard de la première butée 9 du fait de la rotation du marteau 4.

Le marteau 4 est ainsi écarté et se trouve à distance de la cloche 3.

Le fait de déplacer le marteau 4 dans le logement 7 de l'anse 6 désaligne le premier aimant 37 avec les deuxièmes aimants 39, ce qui crée un déséquilibre et donc une force de rappel sur le marteau 4.

Lorsque le marteau 4 est relâché de sa position intermédiaire, le mécanisme à aimants 5 entraine le marteau 4 depuis sa position intermédiaire, au-delà de sa position stable, jusqu'à venir au contact de la première butée 9 et frapper la cloche 3.

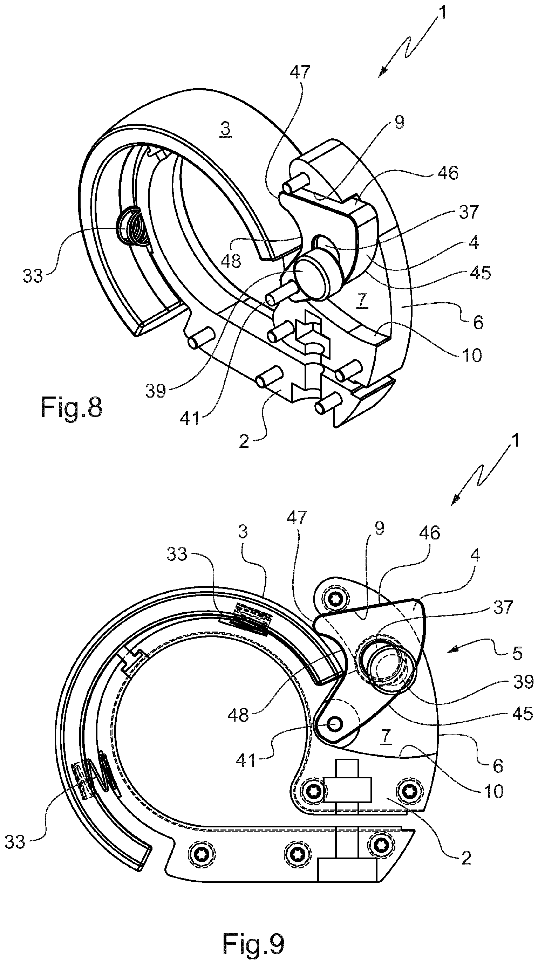

Plus particulièrement, sur les figures 8 et 9, le marteau 4 a été déplacé en rotation dans le logement 7 de l'anse 6, autour de la goupille 41, sous l'effet de la force d'attraction entre le premier aimant 37 et les deuxièmes aimants 39.

Par inertie, le marteau 4 ne s'arrête pas dans sa position stable mais va au-delà jusqu'à ce que son deuxième côté 46 vienne au contact de la première butée 9 sur l'anse 6 du corps 2.

Dans cette position, la troisième extrémité 47 et le troisième côté 48 du marteau 4 viennent au contact et frappent la cloche 3.

Autrement dit, le marteau 4 a son premier côté 45 qui est écarté et donc plus au contact de la deuxième butée 10.

Lorsque le marteau 4 est en butée contre la première butée 9 et a frappé la cloche 3, le mécanisme à aimants 5 ramène le marteau 4 dans sa position stable sans refrapper la cloche 1 (voir figure 4 et 5).

Ceci est facilité par le fait que, comme mentionné plus haut, la distance prédéterminée entre la première butée 9 et le marteau 4 en position stable est relativement faible et donc, par le fait que le premier aimant 37 est relativement proche (ou pas trop éloigné) des deuxièmes aimants 39 lorsque le marteau 4 est contre la première butée 9 et frappe la cloche 3 ; de sorte que la position d'équilibre du mécanisme à aimants 5 est facilement reprise. Cela permet de laisser vibrer la cloche 3, grâce aux ressorts 33, après l'avoir frappée avec le marteau 4.

En d'autres termes le mécanisme à aimants 5 autorise le déplacement du marteau 4 pour frapper la cloche 3 et assure son rappel en position stable.

Un tel mécanisme à aimants 5 est particulièrement commode et durable puisqu'il ne subit pas directement la force exercée sur le marteau 4 pour le déplacer depuis la position stable vers la position intermédiaire.

Au surplus, un tel mécanisme à aimants 5 n'est pas soumis à une usure structurelle et mécanique.

Par conséquent, grâce au mécanisme à aimants 5 que comporte la sonnette 1, ce dernier est particulièrement fiable tout en restant particulièrement simple.

Dans des variantes non illustrées :
- le corps est dépourvu d'anse avec une première butée ;
- le corps n'est pas globalement annulaire mais plutôt rectangulaire ou présente une autre forme ;
- le corps ne présente pas d'interruption entre l'anse et la base ;
- le corps est dépourvu de base et est configuré pour venir s'emboîter ou se clipser grâce à sa paroi globalement annulaire sur un support quelconque ;
- la cloche a une forme différente, par exemple une forme sensiblement hémisphérique, ou bien une forme plutôt de barre métallique droite, ou encore une autre forme ;
- la fixation de la cloche sur le corps est différente, il s'agit par exemple d'un montage sans ressort ou au contraire que par ressorts ;
- le mécanisme à aimant comporte plus d'un premier et des deuxièmes aimants, par exemple une pluralité d'aimants logés dans le marteau et dans l'anse, ou au contraire, un seul aimant dans le marteau et un seul aimant dans l'anse ;
- le marteau n'est pas rotatif dans le logement de l'anse mais est plutôt coulissant ;
- le marteau est pourvu d'un premier côté droit plutôt qu'incurvé et/ou d'un deuxième côté incurvé plutôt que droit ;
- le marteau n'a pas une forme triangulaire mais plutôt en croissant de lune ;
- le dispositif d'avertissement comporte un actionneur pour entrainer le marteau depuis sa position stable vers sa position intermédiaire ;
- dans sa position intermédiaire, le marteau peut ne pas venir au contact de la deuxième butée ; et/ou
- la sonnette est plus particulièrement montée sur une bicyclette, ou sur un tricycle, ou bien sur une trottinette, ou encore sur une voiture à pédales.

On rappelle plus généralement que l'invention ne se limite pas aux exemples décrits et représentés.

## Revendications

1. Dispositif mécanique d'avertissement pour véhicule, notamment pour vélocipède, comportant un corps (2), une cloche (3) montée sur ledit corps et un marteau (4) monté mobile sur ledit corps et par rapport à ladite cloche, **caractérisé en ce qu'**il comporte en outre un mécanisme à aimants (5) qui est configuré pour, lorsque ledit marteau est déplacé depuis une position stable vers une position intermédiaire dans laquelle il est écarté de ladite cloche, entrainer ledit marteau depuis ladite position intermédiaire pour venir frapper ladite cloche puis ramener ledit marteau dans ladite position stable.

2. Dispositif selon la revendication 1, **caractérisé en ce que** ledit mécanisme à aimants (5) comporte au moins un premier aimant (37) logé dans ledit marteau (4) et au moins un deuxième aimant (39) logé dans ledit corps (2).

3. Dispositif selon la revendication 2, **caractérisé en ce que** ledit au moins un premier aimant (37) et ledit au moins un deuxième aimant (39) sont agencés de sorte à ramener naturellement ledit marteau (4) dans sa position stable.

4. Dispositif selon l'une quelconque des revendications 1 à 3, **caractérisé en ce que** ledit marteau (4) est monté mobile en rotation par rapport audit corps (2).

5. Dispositif selon l'une quelconque des revendications 1 à 4, **caractérisé en ce que** ledit corps (2) est pourvu d'une butée (9) contre laquelle ledit marteau (4) vient au contact lorsqu'il frappe ladite cloche (3) et qui permet le retour en position stable dudit marteau sans frapper à nouveau ladite cloche.

6. Dispositif selon la revendication 5, **caractérisé en ce que** ledit corps (2) et ladite cloche (3) sont configurés pour que ladite cloche soit montée à proximité immédiate de ladite butée (9).

7. Dispositif selon l'une des revendications 5 et 6, **caractérisé en ce qu'**il est configuré de sorte que ledit marteau (4) se trouve à une distance prédéterminée de ladite butée (9) en position stable ; grâce à quoi lorsque ledit marteau est en position intermédiaire, il est écarté de ladite cloche (3) et de ladite butée, lorsque ledit marteau est relâché de sa position intermédiaire, ledit mécanisme à aimants (5) entraine ledit marteau depuis sa position intermédiaire, au-delà de sa position stable, jusqu'à venir au contact de ladite butée et frapper ladite cloche, et lorsque ledit marteau a frappé ladite cloche, ledit mécanisme à aimants ramène ledit marteau dans sa position stable sans refrapper ladite cloche

8. Dispositif selon l'une quelconque des revendications 1 à 7, **caractérisé en ce que** ledit corps (2) est pourvu d'une anse (6) ayant un logement (7) dans lequel est au moins partiellement logé ledit marteau (4) et duquel saille une extrémité (8) dudit marteau pour sa préhension.

9. Dispositif selon l'une quelconque des revendications 1 à 8, **caractérisé en ce que** ledit corps (2) est pourvu d'une base (14) pour son montage sur un support quelconque, notamment un guidon de vélocipède.

10. Dispositif selon les revendications 8 et 9, **caractérisé en ce que** ladite base (14) et la dite anse (6) sont à distance l'une de l'autre, formant une interruption (15) dans ledit corps (2), notamment pour son montage sur ledit support quelconque.

11. Dispositif selon l'une quelconque des revendications 1 à 10, **caractérisé en ce que** ledit corps (2) a une forme globalement annulaire et ladite cloche (3) a une forme globalement allongée et incurvée.

12. Dispositif selon l'une quelconque des revendications 1 à 11, **caractérisé en ce que** ladite cloche (3) est assujettie mécaniquement sur ledit corps (2) avec une liberté de mouvement de sorte à pouvoir vibrer par rapport audit corps lorsqu'elle est frappée par ledit marteau (4).

13. Dispositif selon la revendication 12, **caractérisé en ce qu'**il est pourvu d'au moins un plot de montage (30) saillant de l'un de ladite cloche (3) et dudit corps (2), d'au moins un premier logement (32) ménagé dans l'autre dudit corps et de ladite cloche pour recevoir ledit plot de montage ; et **en ce qu'**il est en outre pourvu d'au moins un organe de rappel élastique (33) interposé entre ladite cloche et ledit corps.

14. Dispositif selon l'une quelconque des revendications 1 à 13, **caractérisé en ce que** ledit corps (2) comporte une première coquille (21) et une deuxième coquille (22) assemblée avec ladite première coquille.

15. Véhicule, en particulier un vélocipède, pourvu d'un dispositif mécanique d'avertissement (1) selon l'une quelconque des revendications 1 à 14, qui est monté sur un support quelconque dudit vélocipède.

## Patentansprüche

1. Mechanische Warnvorrichtung für ein Fahrzeug, insbesondere für ein Fahrrad, mit einem Körper (2), einer Glocke (3), die an dem Körper angebracht ist, und einem Hammer (4), der beweglich auf dem Körper und in Bezug auf die Glocke angebracht ist, **dadurch gekennzeichnet, dass** sie weiter einen Magnetmechanismus (5) aufweist, der so konfiguriert ist, dass er den Hammer aus der Zwischenposition antreibt, um die Glocke anzuschlagen und dann den Hammer in die stabile Position zurückzubringen, wenn der Hammer aus einer stabilen Position in eine Zwischenposition bewegt wird, in der er von der Glocke beabstandet ist.

2. Vorrichtung nach Anspruch 1, **dadurch gekennzeichnet, dass** der Magnetmechanismus (5) mindestens einen ersten Magneten (37), der in dem Hammer (4) untergebracht ist, und mindestens einen zweiten Magneten (39), der in dem Körper (2) untergebracht ist, aufweist.

3. Vorrichtung nach Anspruch 2, **dadurch gekennzeichnet, dass** der mindestens eine erste Magnet (37) und der mindestens eine zweite Magnet (39) so angeordnet sind, dass sie den Hammer (4) auf natürliche Weise in seine stabile Position zurückbringen.

4. Vorrichtung nach einem der Ansprüche 1 bis 3, **dadurch gekennzeichnet, dass** der Hammer (4) in Bezug auf den Körper (2) drehbar gelagert ist.

5. Vorrichtung nach einem der Ansprüche 1 bis 4, **dadurch gekennzeichnet, dass** der Körper (2) mit einem Anschlag (9) versehen ist, gegen den der Hammer (4) in Kontakt kommt, wenn er auf die Glocke (3) schlägt, und der die Rückkehr des Hammers in eine stabile Position ermöglicht, ohne die Glocke erneut anzuschlagen.

6. Vorrichtung nach Anspruch 5, **dadurch gekennzeichnet, dass** der Körper (2) und die Glocke (3) so konfiguriert sind, dass die Glocke in unmittelbarer Nähe des Anschlags (9) angebracht ist.

7. Vorrichtung nach einem der Ansprüche 5 und 6, **dadurch gekennzeichnet, dass** sie so konfiguriert ist, dass sich der Hammer (4) in einem vorbestimmten Abstand von dem Anschlag (9) in einer stabilen Position befindet; wodurch, wenn sich der Hammer in einer Zwischenposition befindet, er von der Glocke (3) und dem Anschlag beabstandet ist, wenn der Hammer aus seiner Zwischenposition freigegeben wird, der Magnetmechanismus (5) den Hammer aus seiner Zwischenposition über seine stabile Position hinaus antreibt, bis er den Anschlag berührt und auf die Glocke schlägt, und wenn der Hammer auf die Glocke geschlagen hat, der Magnetmechanismus den Hammer in seine stabile Position zurückbringt, ohne die Glocke erneut anzuschlagen.

8. Vorrichtung nach einem der Ansprüche 1 bis 7, **dadurch gekennzeichnet, dass** der Körper (2) mit einem Griff (6) versehen ist, der ein Gehäuse (7) aufweist, in dem der Hammer (4) zumindest teilweise untergebracht ist und von dem ein Ende (8) des Hammers zum Greifen desselben vorsteht.

9. Vorrichtung nach einem der Ansprüche 1 bis 8, **dadurch gekennzeichnet, dass** der Körper (2) mit einer Basis (14) versehen ist, um ihn auf einem beliebigen Träger, insbesondere einem Fahrradlenker, anzubringen.

10. Vorrichtung nach den Ansprüchen 8 und 9, **dadurch gekennzeichnet, dass** die Basis (14) und der Griff (6) voneinander beabstandet sind, wodurch eine Unterbrechung (15) in dem Körper (2) gebildet wird, insbesondere, um ihn auf einem beliebigen Träger anzubringen.

11. Vorrichtung nach einem der Ansprüche 1 bis 10, **dadurch gekennzeichnet, dass** der Körper (2) eine im Allgemeinen ringförmige Form aufweist und die Glocke (3) eine im Allgemeinen längliche und gekrümmte Form aufweist.

12. Vorrichtung nach einem der Ansprüche 1 bis 11, **dadurch gekennzeichnet, dass** die Glocke (3) mechanisch an dem Körper (2) mit Bewegungsfreiheit befestigt ist, so dass sie in Bezug auf den Körper vibrieren kann, wenn sie von dem Hammer (4) angeschlagen wird.

13. Vorrichtung nach Anspruch 12, **dadurch gekennzeichnet, dass** sie mit mindestens einem Montagezapfen (30), der von der Glocke (3) oder dem Körper (2) vorsteht, mit mindestens einem ersten Gehäuse (32), das in dem anderen Teil des Körpers oder der Glocke vorgesehen ist, um den Montagezapfen aufzunehmen, versehen ist; und dass sie weiter mit mindestens einem elastischen Rückstellelement (33) versehen ist, das zwischen der Glocke und dem Körper angeordnet ist.

14. Vorrichtung nach einem der Ansprüche 1 bis 13, **dadurch gekennzeichnet, dass** der Körper (2) eine erste Schale (21) und eine zweite Schale (22) umfasst, die mit der ersten Schale zusammengebaut ist.

15. Fahrzeug, insbesondere ein Fahrrad, das mit einer mechanischen Warnvorrichtung (1) nach einem der Ansprüche 1 bis 14 versehen ist, die auf einem beliebigen Träger des Fahrrads angebracht ist.

## Claims

1. A mechanical warning device for a vehicle, for example particularly for a velocipede, comprising a body (2), a ringer (3) mounted on said body and a striker (4) movably mounted on said body and relative to said ringer, **characterized in that** it further comprises a magnet mechanism (5) which is configured such that, when said striker is displaced from a stable position to an intermediate position in which it has been displaced away from said ringer, it drives said striker from said intermediate position to strike said ringer then brings said striker back into said stable position.

2. A device according to claim 1, **characterized in that** said magnet mechanism (5) comprises at least one first magnet (37) accommodated in said striker (4) and at least one second magnet (39) accommodated in said body (2).

3. A device according to claim 2, **characterized in that** said at least one first magnet (37) and said at least one second magnet (39) are arranged so as naturally to bring said striker (4) into its stable position.

4. A device according to any one of claims 1 to 3, **characterized in that** said striker (4) is rotatably mounted relative to said body (2).

5. A device according to any one of claims 1 to 4, **characterized in that** said body (2) is provided with a stop (9) against which said striker (4) comes into contact when it strikes said ringer (3) and which enables the return of said striker into the stable position without again striking said ringer.

6. A device according to claim 5, **characterized in that** said body (2) and said ringer (3) are configured in order for said ringer to be mounted in immediate proximity to said stop (9).

7. A device according to one of claims 5 and 6, **characterized in that** it is configured such that said striker (4) is at a predetermined distance from said stop (9) in the stable position; whereby, when said striker is in the intermediate position, it is displaced away from said ringer (3) and from said stop, when said striker is released from its intermediate position, said magnet mechanism (5) drives said striker from its intermediate position, beyond its stable position, until it comes into contact with said stop and strikes said ringer, and when said striker has struck said ringer, said magnet mechanism brings said striker back into its stable position without striking said ringer again.

8. A device according to any one of claims 1 to 7, **characterized in that** said body (2) is provided with a loop (6) having a housing (7) in which is at least partly housed said striker (4) and from which projects one end (8) of said striker for it to be gripped.

9. A device according to any one of claims 1 to 8, **characterized in that** said body (2) is provided with a base (14) for its mounting on some particular mounting, for example the handle bars of a velocipede.

10. A device according to claims 8 and 9, **characterized in that** said base (14) and said loop (6) are at a distance from each other, forming an interruption (15) in said body (2), for example for its mounting on said particular mounting.

11. A device according to any one of claims 1 to 10, **characterized in that** said body (2) is of generally annular shape and said ringer (3) is of generally elongated and curved shape.

12. A device according to any one of claims 1 to 11, **characterized in that** said ringer (3) is mechanically connected to said body (2) with a freedom of movement that allows it to vibrate relative to said body when it is struck by said striker (4).

13. A device according to claim 12, **characterized in that** it is provided with at least one mounting pin (30) projecting from one of said ringer (3) and said body (2), and with at least one first accommodation (32) provided in the other of said body and said ringer to receive said mounting pin; and **in that** it is further provided with at least one elastic return member (33) interposed between said ringer and said body.

14. A device according to any one of claims 1 to 13, **characterized in that** said body (2) comprises a first shell (21) and a second shell (22) assembled together with said first shell.

15. A vehicle, in particular a velocipede, provided with a mechanical warning device (1) according to any one of claims 1 to 14, which is mounted on some particular mounting of said velocipede.
